# EUROPÄISCHE PATENTSCHRIFT

(11) **EP 3 077 451 B1**
(45) Veröffentlichungstag und Bekanntmachung des Hinweises auf die Patenterteilung: **07.02.2018**
(21) Anmeldenummer: 14806261.5
(22) Anmeldetag: 03.12.2014
(51) Int. Cl.: C08J 9/22, C08J 9/04, B29C 44/34, C08J 9/232, C08J 9/16, C08J 9/20

(54) **VORSCHÄUMUNG VON POLY(METH)ACRYLIMID-PARTIKELN FÜR DAS ANSCHLIESSENDE FORMSCHÄUMEN IN GESCHLOSSENEN WERKZEUGEN**
PREFOAMING OF POLY(METH)ACRYLIMIDE PARTICLES FOR SUBSEQUENT FOAM MOULDING IN CLOSED TOOLS
PROCESSUS DE PRÉ-MOUSSAGE DE PARTICULES DE POLY(MÉTH)ACRYLIMIDE POUR EFFECTUER ENSUITE LE MOUSSAGE DANS DES MOULES FERMÉS

(30) Priorität: 06.12.2013 DE 102013225132
(43) Veröffentlichungstag der Anmeldung: 12.10.2016
(73) Patentinhaber: Evonik Röhm GmbH, 64293 Darmstadt (DE)
(72) Erfinder: BERNHARD, Kay, 64291 Darmstadt (DE); LIEBL, Ina, 64347 Griesheim (DE); HOLLEYN, Denis, 65558 Balduinstein (DE); SEIPEL, Christoph, 64832 Babenhausen (DE)
(86) Internationale Anmeldenummer: PCT/EP2014/076333
(87) Internationale Veröffentlichungsnummer: WO 2015/082509

(56) Entgegenhaltungen:
- EP-A1- 0 987 292
- WO-A1-2013/056947
- WO-A1-2014/161707
- DE-A1- 1 817 156

## Beschreibung

### Gebiet der Erfindung

Die Erfindung betrifft ein Verfahren zur Herstellung von vorgeschäumten Poly(meth)acrylimid- (P(M)I-)Partikeln, insbesondere von Polymethacrylimid- (PMI-)Partikeln, die zu Schaumformteilen oder Composites weiterverarbeitet werden können. Das Verfahren zeichnet sich dabei dadurch aus, dass ein Polymergranulat zunächst in einer Vorrichtung mittels IR-Strahlung einer dazu geeigneten Wellenlänge aufgeheizt und damit vorgeschäumt wird. Dieses Granulat kann in folgenden Verfahrensschritten z.B. in einem Presswerkzeug unter Ausschäumen zu einem Formteil oder einem Composite Werkstück mit Schaumkern weiterverarbeitet werden.

Beim Schäumen von Polymer-, insbesondere von P(M)I-Partikeln in geschlossenen Formen/Werkzeugen kommt es u.a. aufgrund des Einflusses der Schwerkraft zu einer ungleichmäßigen Verteilung der einzelnen Partikel in der Form und damit zu einer inhomogenen Dichteverteilung. Diesem wird erfindungsgemäß dadurch begegnet, dass die Partikel vor dem Füllen der Form auf eine solche Schüttdichte vorgeschäumt werden, die einen sehr hohen Füllungsgrad der Bauteilform ermöglicht. D.h. die Form ist vor dem eigentlichen Formschäumen lose, aber komplett gefüllt, und anschließend werden die Hohlräume zwischen den Partikeln durch Nachschäumen unter Temperatureinwirkung ausgeschäumt. Erfindungsgemäß ist es möglich, eine homogene Dichteverteilung im Bauteil zu gewährleisten und damit homogene Eigenschaften des Endprodukts zu erzielen.

### Stand der Technik

In DE 27 26 260 wird die Herstellung von Poly(meth)acrylimid-Schäumen (P(M)I-Schäumen) beschrieben, die ausgezeichnete mechanische Eigenschaften auch bei hohen Temperaturen aufweisen. Die Herstellung der Schäume erfolgt im Gussverfahren, d.h. die Monomere und erforderliche Zusatzstoffe werden gemischt und in einer Kammer polymerisiert. Das Polymerisat wird in einem zweiten Schritt durch Erwärmen geschäumt. Diese Verfahren sind sehr aufwendig und kaum zu automatisieren.

DE 3 630 930 beschreibt eine weiteres Verfahren zur Schäumung der oben genannten Copolymerplatten aus Methacrylsäure und Methacrylnitril. Hierbei werden die Polymerplatten mit Hilfe eines Mikrowellenfeldes zum Schäumen gebracht, weshalb dieses im Folgenden als Mikrowellenverfahren bezeichnet wird. Hierbei muss beachtet werden, dass die zu schäumende Platte oder zumindest ihre Oberfläche vorher bis oder über den Erweichungspunkt des Materials erhitzt werden muss. Da unter diesen Bedingungen naturgemäß auch die Schäumung des durch die äußerliche Erwärmung erweichten Materials einsetzt, ist der Schäumprozeß allein durch den Einfluss eines Mikrowellenfeldes nicht steuerbar, sondern muss von einem begleitenden Heizen von außen mitgesteuert werden. Es wird also zu dem normalen einstufigen Heißluftverfahren ein Mikrowellenfeld hinzugeschaltet um die Schäumung zu beschleunigen. Das Mikrowellenverfahren hat sich jedoch als zu kompliziert und daher nicht praxisrelevant erwiesen und findet bis heute keine Anwendung. Darüber hinaus wird sehr energiereiche Strahlung geringer Wellenlänge benötigt, um eine genügende Eindringtiefe in die Platte zu gewährleisten. Trotzdem ist dieses Verfahren äußerst ineffizient und die Bestrahlungsdauer ohne zusätzliches Heizen würde auch bei sehr dünnen Platten mindestens 30 min betragen.

Mechanisch stabile PMI-Schäume, die mit Allylmethacrylat vernetzt sind, finden sich in EP 356 714. Als Radikalbildner wird beispielsweise Azo-bis-isobutyronitril verwendet, dem zu polymerisierenden Gemisch werden 0,1 Gew.-% bis 10 Gew.-% an elektrisch leitfähigen Partikeln zugesetzt Auch diese sehr festen Schäume zeigen eine nur sehr geringe Reißdehnung. Gleiches gilt für die in JP 2006 045532 offenbarten, mit Metallsalzen ionisch vernetzten PMI-Schäume. Jedoch werden auch diese Schäume aus Polymerplatten hergestellt und nach dem Schäumen aufwendig in Form geschnitten oder gesägt.

Neben PMI-Schäumen sind mit ähnlichen Eigenschaften auch Schäume auf Basis von Methacrylsäure und Acrylnitril (PI-Schäume) bekannt. Diese werden beispielsweise in der CN 100420702C beschrieben. Jedoch werden auch diese Schäume mittels Platten hergestellt.

Es sind neben diesen Verfahren, die von einer nicht geschäumten Polymerplatte ausgehen, auch so genannte In-Mold-Foaming Prozesse, ausgehend von einem Granulat, bekannt. Gegenüber den beschriebenen Verfahren haben diese jedoch grundsätzlich mehrere Nachteile. So wird nur eine ungleichmäßige Porenstruktur, die sich zwischen dem Inneren der ursprünglichen Partikel und den Grenzflächen zwischen den ursprünglichen Partikeln unterscheidet, erzielt. Weiterhin ist die Dichte des Schaums aufgrund der ungleichmäßigen Verteilung der Partikel beim Aufschäumen - wie bereits beschrieben - zusätzlich inhomogen. Weiterhin kann man diesen aus Granulat geschäumten Produkten eine schlechtere Kohäsion an den Grenzflächen, die sich zwischen den ursprünglichen Partikeln beim Schäumen bilden, und damit gegenüber aus einer Halbzeugplatte geschäumten Materialien schlechtere mechanische Eigenschaften beobachten.
In WO 2013/056947 wird ein In-Mold-Verfahren beschrieben, bei dem zumindest letzteres Problem dadurch gelöst wurde, dass die Partikel vor dem Abfüllen in das formgebende Schäumungswerkzeug mit einem Haftvermittler, z.B. mit einem Polyamid oder einem Polymethacrylat beschichtet werden. Damit wird eine sehr gute Korngrenzenhaftung erzielt. Die ungleiche Porenverteilung im Endprodukt wird durch diese Methode jedoch nicht vermieden.

### Aufgabe

Vor dem Hintergrund des diskutierten Standes der Technik war es daher Aufgabe der vorliegenden Erfindung, ein neues Verfahren zur Verfügung zu stellen, mittels dem einfach und mit hoher Durchsatzgeschwindigkeit P(M)I-Partikel für das In-Mold-Foaming zur Verfügung gestellt werden können. Dieses Verfahren soll dabei schnell und energiearm durchführbar sein.

Insbesondere war es Aufgabe der vorliegenden Erfindung ein P(M)I-Material für das In-Mold-Foaming zur Verfügung zu stellen, dass im Endprodukt zu einer gleichmäßigen Dichteverteilung führt.

Weiterhin soll das Verfahren zur Vorbehandlung der Partikel für das In-Mold-Foaming schnell und kontinuierlich durchführbar sein.

Weitere, an dieser Stelle nicht explizit diskutierte Aufgaben, können sich aus dem Stand der Technik, der Beschreibung, den Ansprüchen oder den Ausführungsbeispielen ergeben.

### Lösung

Im Weiteren werden unter der Formulierung Poly(meth)acrylimid Polymethacrylimide, Polyacrylimide oder Mischungen daraus verstanden. Entsprechendes gilt für die entsprechenden Monomere wie (Meth)acrylimid bzw. (Meth)acrylsäure. So werden beispielsweise unter dem Begriff (Meth)acrylsäure sowohl Methacrylsäure als auch Acrylsäure sowie Mischungen aus diesen beiden verstanden.

Gelöst werden die Aufgaben durch ein neuartiges Verfahren zur Herstellung von vorgeschäumten, für ein In-Mold-Foaming verwendbaren Poly(meth)acrylimid-(P(M)I)-Partikeln bzw. von Compositematerialien mit einem Schaumkern aus einem Hartschaum bzw. von Formteilen aus einem P(M)I-Schaum, die mit diesen P(M)I-Partikeln hergestellt wurden. Dieses Verfahren zeichnet sich dadurch aus, dass nicht geschäumte P(M)I-Partikel mit Infrarot-Strahlung, die zu mindestens 80% eine Wellenlänge zwischen 1,4 und 10,0 µm aufweist, vorgeschäumt werden.

Dazu wird bevorzugt ein IR-Strahler verwendet, dessen Emission zu mindestens 5% in einem mittleren bis langen IR-Bereich mit einem Wellenlängenbereich zwischen 5,0 und 9,0 µm liegt. Ganz besonders bevorzugt sind dabei zwei voneinander getrennte Wellenlängenbereiche, in denen der IR-Strahler zu mindesten 5% emittiert. Der erste dieser beiden Bereiche liegt zwischen 5,3 und 6,5 µm. Der zweite bevorzugte Wellenlängenbereich liegt zwischen 7,8 und 8,9 µm. Überraschend ist die IR-Strahlung mit einer Wellenlänge in einem dieser beiden Bereiche besonders effektiv für das Vorschäumen einsetzbar.

Für die Realisierung einer solchen Strahlung werden besonders bevorzugt IR-Strahler verwendet, die eine Temperatur nach Wien zwischen 780 K und 1800 K, insbesondere zwischen 800 und 1200 K aufweisen. Die Einteilung der IR-Strahlung erfolgt gemäß DIN 5031.

Besonders überraschend wurde gefunden, dass IR-Strahlung mit den angegebenen Wellenlängen, insbesondere mit den bevorzugten Wellenlängen überhaupt für das Vorschäumen von P(M)I-Partikeln geeignet ist. Für P(M)I in Plattenform, wie es aus dem Stand der Technik bekannt ist, werden Strahlungsquellen, wie zum Beispiel 2000 K Strahler verwendet. Diese IR-Strahler haben ein Emissionsmaximum bei ca. 1,2 µm. Damit wird eine Strahlung hoher Energie emittiert, die eine entsprechende Eindringtiefe in das Material gewährleistet. In einem Wellenlängenbereich oberhalb von 5,0 µm emittieren diese Strahler jedoch fast gar nicht. Überraschend wurde gefunden, dass im erfindungsgemäße Verfahren gerade dieser Emissionsbereich für das Vorschäumen von P(M)I-Partikeln besonders geeignet ist.

In einer bevorzugten Ausführungsform wird das erfindungsgemäße Verfahren dergestalt ausgeführt, dass die nicht vorgeschäumten P(M)I-Partikel auf eine Transportvorrichtung, wie zum Beispiel ein Fließband aufgebracht werden und durch eine Heizstation mit entsprechenden IR-Strahlungsquellen, die insbesondere in dem gewünschten Wellenlängenbereich emittieren, transportiert werden. Um besonders gute Ergebnisse zu erlangen, sollte dabei die Transportvorrichtung derart beladen werden, dass die P(M)I-Partikel einlagig auf dieser liegen und sämtlich direkt von den IR-Strahlungsquellen bestrahlt werden. Dieses Vorschäumen kann bevorzugt bereits nach 5 min, besonders bevorzugt nach 3 min abgeschlossen sein. Die Vorschäumzeit ergibt sich dabei für die beschriebene Ausführungsform aus der Partikelgröße, der Treibmittelart und -konzentration, der Wellenlänge, dem Abstand zu den Strahlungsquellen und der Strahlungsintensität. Aus der Vorschäumzeit ergibt sich wiederum die einzustellende Transportgeschwindigkeit der Partikel.

Die Strahlungsintensität und -dauer sind dabei von verschiedenen Faktoren abhängig und für den Fachmann mit wenigen Versuchen optimierbar. So sind diese Heizparameter von der Erweichungstemperatur des verwendeten Schaumwerkstoffs, der Siede- bzw. Zersetzungstemperatur des verwendeten Treibmittels, der Porengröße bzw. Werkstoffdichte, der Werkstoffdicke und der Distanz der Strahlungsquellen zum Schaumkern abhängig. Die Strahlungsintensität muss in der Regel bei festeren Materialien, einer höheren Werkstoffdichte, einer größeren Werkstoffdicke und einem größeren Abstand zu den Strahlungsquellen erhöht werden. Weiterhin kann die Strahlungsintensität in Abhängigkeit des zu erzielenden Umformungsgrads variiert werden. Die Strahlungsintensität wird dazu in der Regel so eingestellt, dass in der Mitte des P(M)I-Partikels eine Temperatur zwischen 170 und 250 °C erzielt wird.

In einer besonderen Ausführungsform der vorliegenden Erfindung ist die besagte Heizstation in eine mehrstufige Produktionsanlage integriert. Dabei sind insbesondere zwei Varianten von Interesse. In der ersten Variante werden die vorgeschäumten P(M)I-Partikel nach der Heizstation direkt in ein Formgebungswerkzeug geleitet. Für solche Formgebungswerkzeuge gibt es mehrere Varianten. So kann es sich dabei um ein Formgeben des reinen Schaumwerkstoffs mittels eines In-Mold-Foamings handeln. Ein solcher Folgeprozess kann zum Beispiel in EP 2 598 304 nachgelesen werden. Dabei ist es auch möglich, dem Schaum nicht nur eine Form zu geben, sondern diesen gleichzeitig mit Deckmaterialien, wie zum Beispiel Composite-Materialien zu versehen. Somit ist es auf einfache Weise möglich, komplex geformte Schaumkern-Composite-Materialien aus den erfindungsgemäß vorgeschäumten P(M)I-Partikeln herzustellen.

Gegenüber nicht vorgeschäumten Partikeln können dabei Formteile oder Schaumkern-Composites mit einer deutlich homogeneren Porenstruktur und ohne Fehlstellen hergestellt werden. Somit ist es durch Integration des erfindungsgemäßen Verfahrens in ein Gesamtverfahren zur Herstellung von komplex geformten Schaumwerkstoffen oder Schaumkern-Composite-Materialien möglich, diese schnell, in kurzen Taktzeiten und mit besonders guter Qualität herzustellen. Weiterhin ist beim In-Mold-Foaming das Befüllen von Formen mit vorgeschäumten Partikeln einfacher, als wenn diese nicht vorgeschäumt und damit merklich kleiner sind. Dieser Vorteil kommt bei sehr dünnwandigen Formteilen naturgemäß weniger zum Tragen, so dass in einem solchen Fall nicht vorgeschäumte Partikel zum Einsatz kommen können. So ist es möglich Formen im Großen und Ganzen mit vorgeschäumten Partikeln und solche Bereiche, die in sehr dünnwandigen Formbereichen enden, mit nicht vorgeschäumten Partikeln zu befüllen.

Weiterhin hat das vorliegende Verfahren gegenüber dem Stand der Technik den großen Vorteil, dass das Vorschäumen zwar schnell erfolgt, dieses aber gleichzeitig so schonend ist, dass die Oberfläche der P(M)I-Partikel nicht geschädigt wird.

In der zweiten, gleichfalls bevorzugten Variante ist das erfindungsgemäße Verfahren derart in einen Gesamtprozess integriert, dass die vorgeschäumten P(M)I-Partikel zunächst in einen Vorratsbehälter transportiert werden. Aus diesem Vorratsbehälter wird darauf mindestens ein Formgebungswerkzeug befüllt. Diese Variante bietet sich insbesondere bei Gesamtverfahren an, bei denen eine Heizstation mit mehreren Formgebungswerkzeugen kombiniert ist. Auf diese Weise kann die Heizstation kontinuierlich betrieben werden, während die Formgebungswerkzeuge naturgemäß batchweise mit festen Taktzeiten arbeiten.

Bevorzugt weist die Heizstation mehrere IR-Lichtquellen auf, so dass die Oberfläche der Granulatkörner gleichmäßig aufgeheizt wird. Überraschend wurde gefunden, dass durch das schonende Erhitzen des Materials ein schnelles und effizientes Vorschäumen erfolgen kann, ohne dass es gleichzeitig zu einer Schädigung des Materials kommt. Insbesondere die z.B. beim Erhitzen in einem Ofen zu beobachtende Schädigung der Hartschaumoberfläche bleibt bei sachgerechter Durchführung des vorliegenden Verfahrens aus. Die Strahlung des verwendeten IR-Spektralbereiches durchdringt die Gasphase der Schaumzellen absorptionsfrei und bewirkt ein direktes Erhitzen der Zellwandmatrix. Besonders überraschend wurde dabei gefunden, dass durch ein solches Aufheizen mit IR-Strahlung eine besonders gleichmäßige Wärmeverteilung auch in größeren Partikeln erzielt werden kann.

Zusätzlich können zur Verbesserung der Haftung zwischen Schaumkernmaterial und Deckschichten, die in späteren Verfahrensschritten zur Herstellung von Composite-Materialien eine Rolle spielt, Haftvermittler verwendet werden. Diese Haftvermittler können alternativ zu einer Applikation in einem späteren Verfahrensschritt auch schon vor dem erfindungsgemäßen Vorschäumen auf der Oberfläche der P(M)I-Partikel aufgetragen sein. Als Haftvermittler haben sich insbesondere Polyamide oder Poly(meth)acrylate als geeignet erwiesen. Es können aber auch niedermolekulare Verbindungen, die aus der Herstellung von Compositematerialien, insbesondere in Abhängigkeit vom verwendeten Matrixmaterial der Deckschicht, dem Fachmann bekannt sind, verwendet werden.

Das erfindungsgemäße Verfahren hat insbesondere den großen Vorteil, dass es sehr schnell und damit in Kombination mit Folgeprozessen mit sehr geringen Taktzeiten durchgeführt werden kann. Damit kann das erfindungsgemäße Verfahren sehr gut in einer Serienproduktion integriert werden.

Für das gesamte erfindungsgemäße Verfahren richten sich die zu wählenden Verfahrensparameter nach der im Einzelfall eingesetzten Anlage und deren Auslegung, sowie den eingesetzten Materialien. Sie können durch wenige Vorversuche für den Fachmann leicht ermittelt werden.

Das erfindungsgemäß verwendete Material ist P(M)I, insbesondere PMI. Solche P(M)I-Schäume werden auch als Hartschäume bezeichnet und zeichnen sich durch eine besondere Festigkeit aus. Die P(M)I-Schäume werden normalerweise in einem zweistufigen Verfahren hergestellt: a) Herstellung eines Gusspolymerisats und b) Aufschäumen dieses Gusspolymerisats. Nach Stand der Technik werden diese dann in die gewünschte Form geschnitten bzw. gesägt. Eine Alternative, die technisch noch weniger etabliert ist, ist das ausgeführte In-Mold-Foaming für das das erfindungsgemäße Verfahren eingesetzt werden kann.

Für das erfindungsgemäße Verfahren werden bevorzugt nicht vorgeschäumte P(M)I-Partikel mit einer Partikelgröße zwischen 0,5 und 5,0 mm, bevorzugt zwischen 1,0 und 4,0 mm eingesetzt.

Diese nicht vorgeschäumten P(M)I-Partikel können in zwei verschiedenen Verfahrensvarianten hergestellt werden, bevor diese in dem erfindungsgemäßen Verfahren eingesetzt werden. In einer ersten Variante werden die P(M)I-Partikel als Granulat durch Mahlen aus einem P(M)I-Halbzeug erhalten. Bei diesem P(M)I-Halbzeug handelt es sich um das zuvor beschriebene, nicht aufgeschäumte Plattenpolymerisat, welches als Gusspolymerisat erhalten wird.

Zur Herstellung des Gusspolymerisats werden zunächst Monomergemische, welche (Meth)acrylsäure und (Meth)acrylnitril, vorzugsweise in einem Molverhältnis zwischen 2:3 und 3:2, als Hauptbestandteile enthalten, hergestellt. Zusätzlich können weitere Comonomere verwendet werden, wie z.B. Ester der Acryl- oder Methacrylsäure, Styrol, Maleinsäure oder Itaconsäure bzw. deren Anhydride oder Vinylpyrrolidon. Dabei sollte der Anteil der Comonomeren jedoch nicht mehr als 30 Gew% betragen. Geringe Mengen von vernetzenden Monomeren, wie z.B. Allylacrylat, können auch verwendet werden. Die Mengen sollten jedoch vorzugsweise höchstens 0,05 Gew% bis 2,0 Gew% betragen.

Das Gemisch für die Copolymerisation enthält ferner Treibmittel, die sich bei Temperaturen von etwa 150 bis 250 °C entweder zersetzen oder verdampfen und dabei eine Gasphase bilden. Die Polymerisation erfolgt unterhalb dieser Temperatur, so dass das Gusspolymerisat ein latentes Treibmittel enthält. Die Polymerisation findet zweckmäßig in Blockform zwischen zwei Glasplatten statt.

Die Herstellung solcher PMI-Halbzeuge ist dem Fachmann grundsätzlich bekannt und kann beispielsweise in EP 1 444 293, EP 1 678 244 oder WO 2011/138060 nachgelesen werden. Als PMI-Halbzeuge seien insbesondere solche genannt, die in aufgeschäumter Form unter dem Produktnamen ROHACELL® von der Firma Evonik Industries AG vertrieben werden. Bezüglich Herstellung und Verarbeitung sind zu den PMI-Schäumen Acrylimid-Halbzeuge (PI-Halbzeuge) als Analoga anzusehen. Aus toxikologischen Gründen sind diese jedoch gegenüber anderen Schaummaterialien deutlich weniger bevorzugt.

In einer zweiten Variante des erfindungsgemäßen Verfahrens handelt es sich bei den P(M)I-Partikeln um Suspensionspolymerisate, die als solche direkt in das Verfahren eingebracht werden können. Die Herstellung solcher Suspensionspolymerisate kann beispielsweise in DE 18 17 156 oder in der europäischen Patentanmeldung mit dem Anmeldeaktenzeichen 13155413.1 nachgelesen werden.

Bevorzugt weisen die vorgeschäumten P(M)I-Partikel eine Schüttdichte von 40 bis 400 kg/m³, bevorzugt zwischen 60 und 300 kg/m³ und besonders bevorzugt zwischen 80 und 220 kg/m³ auf.

Weiterhin weisen die vorgeschäumten P(M)I-Partikel bevorzugt eine maximale Größe zwischen 1,0 und 25 mm, besonders bevorzugt zwischen 2,0 und 20 mm auf.

Die erfindungsgemäß hergestellten vorgeschäumten P(M)I-Partikel können wie beschrieben zu Schaumformteilen bzw. Schaumkern-Composite-Materialien weiterverarbeitet werden. Diese Schaumformteilen bzw. Schaumkern-Composite-Materialien können insbesondere Anwendung in der Serienfertigung z.B. für Karosseriebau oder für Innenverkleidungen in der Automobilindustrie, Interieurteile im Schienenfahrzeugs- oder Schiffsbau, in der Luft- und Raumfahrtindustrie, im Maschinenbau, bei der Herstellung von Sportgeräten, beim Möbelbau oder bei der Konstruktion von Windkraftanlagen finden.

### Ausführungsbeispiele

Als PMI-Granulat wurde ein Material verwendet, das als PMI-Schaum unter dem Produktnamen ROHACELL RIMA von der Firma Evonik Industries vertrieben wird. Das Granulat wurde aus einer nicht vorgeschäumten, auspolymerisierten Polymerplatte mittels Mahlen mit einer Schneidemühle RS3806 der Firma Getecha hergestellt. Das erhaltene Granulat hatte an der größten Stelle einen maximalen Durchmesser von 5 mm.

### Vergleichsbeispiel 1: Vorschäumung mittels Umluftofen

Das nicht vorgeschäumte Mahlgut aus der Mühle hat eine Rohdichte von ca. 1200 kg/m³ und eine Schüttdichte von ca. 600 bis 700 kg/m³. Durch die Vorschäumung in einem Ofen werden diese beiden Dichten reduziert. Dies geschieht durch Variation der Verweilzeit sowie der Temperatur. Dafür wird das Mahlgut auf ein Metallblech, das mit Trennfolie bedeckt ist, lose verteilt. Dies sollte möglichst gleichmäßig geschehen, und die Schichtstärke sollte den größten Korndurchmesser nicht überschreiten, um eine homogene Aufschäumung zu garantieren. Danach kommt das Blech für z.B. 45 min in den auf Vorschäumtemperatur vorgeheizten Ofen.

Bei einer Vorschäumtemperatur von 175°C kann so die Schüttdichte von ca. 600-700 kg/m³ in 30 Minuten auf etwa 360-400 kg/m³ reduziert werden.

### Beispiel 1: Vorschäumung mittels IR-Kammer

Es wurden Strahler der Fa. KRELUS Infrared AG mit folgenden Eigenschaften verwendet:
Dabei handelt es sich um mittelwellige Metallfolienstrahler mit Wellenlängenschwerpunkt bei 2,5 µm (bis 9,6 µm wirksam). 2,5 µm entsprechen dabei einer Wien-Temperatur von 850 °C. Der Träger ist ein Metallgehäuse, die Metallfolien dienen als Widerstandmaterial und sind gewellt, um eine große Abstrahlfläche zu ermöglichen.

In der IR-Kammer sind oben und unten vollflächig Strahler angeordnet (3*3 Module) mit einer Nennleistung von (3*3*2,5 kW) 22,5 kW Gesamtleistung. Die Strahler sind stufenlos regelbar und werden nicht aktiv gekühlt. Der Flächenstrahler ist als Modul aufgebaut mit einer Einzelmodulgröße von 123 x 248 mm, Strahlerhöhe beträgt 65 mm.

Die mit den IR-Strahlungsquellen ausgestattete Kammer wird 1,5 h mit eingeschaltetem Flächenstrahler betrieben, so dass sich eine Oberflächentemperatur von ca.160°C, bzw. eine Unterseitentemperatur von ca. 135°C einstellt. Dies erfolgt zur besseren Reproduzierbarkeit der Ergebnisse in Hinblick auf ein kontinuierlich durchgeführtes Vorschäumen.

Dann wird das Vorschäumgut auf der vortemperierten Auflage verteilt wie oben beschrieben, und diese in die Kammer gestellt. Für den Vorschäumprozess werden das obere und untere Strahlerfeld aktiviert. Als Strahlenquellen wurden mehrere Strahler, die ein Wellenlängenmaximum zwischen 1,4 und 3,0 µm emittieren, verwendet. Nach Ablauf der Schäumzeit von 10 min werden die Strahler abgeschaltet, und die Auflage mit Mahlgut aus dem Ofen entnommen.

Beispiel für Vorschäumparameter: Bei einer Vorschäumtemperatur von ca. 190°C kann so die Schüttdichte von ca. 600-700 kg/m³ in 2 Minuten auf etwa 130 kg/m³ reduziert werden. Die eingesetzten Partikel hatten an der jeweils dicksten Stelle einen Durchmesser zwischen 1 und 5 mm. Die vorgeschäumten Partikel wiesen an der dicksten Stelle einen Durchmesser zwischen 2 und 20 mm auf.

Wie aus dem Vergleich zwischen Vergleichsbeispiel 1 und Beispiel 1 ersichtlich ist, können deutlich geringere Schüttdichten, d.h. deutlich größere Vorschäumungsgrade in deutlich geringerer Zeit mit der erfindungsgemäßen Methode erzielt werden.

## Patentansprüche

1. Verfahren zur Herstellung von vorgeschäumten, für ein In-Mold-Foaming verwendbaren Poly(meth)acrylimid- (P(M)I)-Partikeln, **dadurch gekennzeichnet, dass** nicht geschäumte P(M)I-Partikel mit Infrarot-Strahlung, die zu mindestens 80% eine Wellenlänge zwischen 1,4 und 10,0 µm aufweist, vorgeschäumt werden.

2. Verfahren gemäß Anspruch 1, **dadurch gekennzeichnet, dass** der verwendete IR-Strahler zu mindestens 5% in einem Wellenlängenbereich zwischen 5,0 und 9,0 µm emittiert.

3. Verfahren gemäß Anspruch 2, **dadurch gekennzeichnet, dass** der verwendete IR-Strahler zu mindestens 5% in einem Wellenlängenbereich zwischen 5,3 und 6,5 µm oder zwischen 7,8 und 8,9 µm emittiert.

4. Verfahren gemäß einem der Ansprüche 1 bis 3, **dadurch gekennzeichnet, dass** der IR-Strahler eine Temperatur nach Wien zwischen 780 K und 1800 K aufweist.

5. Verfahren gemäß Anspruch 4, **dadurch gekennzeichnet, dass** der IR-Strahler eine Temperatur nach Wien zwischen 800 und 1200 K aufweist.

6. Verfahren gemäß einem der Ansprüche 1 bis 5, **dadurch gekennzeichnet, dass** die nicht vorgeschäumten P(M)I-Partikel eine Partikelgröße zwischen 0,5 und 5,0 mm aufweisen.

7. Verfahren gemäß einem der Ansprüche 1 bis 6, **dadurch gekennzeichnet, dass** das Vorschäumen innerhalb von höchstens 5 min durchgeführt wird.

8. Verfahren gemäß einem der Ansprüche 1 bis 7, **dadurch gekennzeichnet, dass** die nicht vorgeschäumten P(M)I-Partikel einlagig auf einem Fließband durch eine Heizstation, IR-Strahlungsquellen aufweisend, transportiert werden.

9. Verfahren gemäß Anspruch 8, **dadurch gekennzeichnet, dass** die vorgeschäumten P(M)I-Partikel nach der Heizstation direkt in ein Formgebungswerkzeug oder in einen Vorratsbehälter, aus dem mindestens ein Formgebungswerkzeug befüllt wird, transportiert werden.

10. Verfahren gemäß einem der Ansprüche 1 bis 9, **dadurch gekennzeichnet, dass** die nicht vorgeschäumten P(M)I-Partikel als Granulat durch Mahlen aus einem P(M)I-Halbzeug erhalten werden.

11. Verfahren gemäß einem der Ansprüche 1 bis 9, **dadurch gekennzeichnet, dass** es sich bei den P(M)I-Partikeln um ein Suspensionspolymerisat handelt.

12. Verfahren gemäß einem der Ansprüche 1 bis 11, **dadurch gekennzeichnet, dass** die vorgeschäumten P(M)I-Partikel eine maximale Größe zwischen 1,0 und 25 mm aufweisen.

13. Verfahren gemäß einem der vorgenannten Ansprüche, **dadurch gekennzeichnet, dass** die vorgeschäumten P(M)I-Partikel eine Schüttdichte von 60 bis 300 kg/m³ aufweisen.

## Claims

1. Process for the production of prefoamed poly(meth)acrylimide (P(M)I) particles that can be used for in-mould foaming, **characterized in that** unfoamed P(M)I particles are prefoamed by infrared radiation, at least 80% of which has a wavelength of from 1.4 to 10.0 µm.

2. Process according to Claim 1, **characterized in that** the IR source used emits to an extent of at least 5% in a wavelength range from 5.0 to 9.0 µm.

3. Process according to Claim 2, **characterized in that** the IR source used emits to an extent of at least 5% in a wavelength range from 5.3 to 6.5 µm or from 7.8 to 8.9 µm.

4. Process according to any of Claims 1 to 3, **characterized in that** the temperature of the IR source, calculated by Wien's method, is from 780 K to 1800 K.

5. Process according to Claim 4, **characterized in that** the temperature of the IR source, calculated by Wien's method, is from 800 to 1200 K.

6. Process according to any of Claims 1 to 5, **characterized in that** the size of the P(M)I particles that have not been prefoamed is from 0.5 to 5.0 mm.

7. Process according to any of Claims 1 to 6, **characterized in that** the prefoaming is carried out within at most 5 min.

8. Process according to any one of Claims 1 to 7, **characterized in that** the P(M)I particles that have not been prefoamed are transported in a single layer on a conveyor belt through a heater unit having sources of IR radiation.

9. Process according to Claim 8, **characterized in that**, after the heating unit, the prefoamed P(M)I particles are transported directly into a shaping mould or into a storage container from which material is charged to at least one shaping mould.

10. Process according to any of Claims 1 to 9, **characterized in that** the P(M)I particles that have not been prefoamed are obtained as granulate from a semifinished P(M)I product by grinding.

11. Process according to any of Claims 1 to 9, **characterized in that** the P(M)I particles are a suspension polymer.

12. Process according to any of Claims 1 to 11, **characterized in that** the maximum size of the prefoamed P(M)I particles is from 1.0 to 25 mm.

13. Process according to any of the preceding claims, **characterized in that** the bulk density of the prefoamed P(M)I particles is from 60 to 300 kg/m.

## Revendications

1. Procédé de fabrication de particules de poly(méth)acrylamide (P(M)I) prémoussées, utilisables pour un moussage en moule, **caractérisé en ce que** des particules de P(M)I non moussées sont prémoussées avec un rayonnement infrarouge, qui présente à hauteur d'au moins 80 % une longueur d'onde comprise entre 1,4 et 10,0 µm.

2. Procédé selon la revendication 1, **caractérisé en ce que** l'émetteur d'IR utilisé émet à hauteur d'au moins 5 % dans une plage de longueurs d'onde comprise entre 5,0 et 9,0 µm.

3. Procédé selon la revendication 2, **caractérisé en ce que** l'émetteur d'IR utilisé émet à hauteur d'au moins 5 % dans une plage de longueurs d'onde comprise entre 5,3 et 6,5 µm ou entre 7,8 et 8,9 µm.

4. Procédé selon l'une quelconque des revendications 1 à 3, **caractérisé en ce que** l'émetteur d'IR présente une température selon Wien comprise entre 780 K et 1 800 K.

5. Procédé selon la revendication 4, **caractérisé en ce que** l'émetteur d'IR présente une température selon Wien comprise entre 800 et 1 200 K.

6. Procédé selon l'une quelconque des revendications 1 à 5, **caractérisé en ce que** les particules de P(M)I non prémoussées présentent une taille de particule comprise entre 0,5 et 5,0 mm.

7. Procédé selon l'une quelconque des revendications 1 à 6, **caractérisé en ce que** le prémoussage est réalisé en au plus 5 minutes.

8. Procédé selon l'une quelconque des revendications 1 à 7, **caractérisé en ce que** les particules de P(M)I non prémoussées sont transportées en une couche sur une bande transporteuse au travers d'une station de chauffage comprenant des sources de rayonnement IR.

9. Procédé selon la revendication 8, **caractérisé en ce que** les particules de P(M)I prémoussées sont transportées après la station de chauffage directement dans un outil de façonnage ou dans un contenant de stockage, à partir duquel au moins un outil de façonnage est rempli.

10. Procédé selon l'une quelconque des revendications 1 à 9, **caractérisé en ce que** les particules de P(M)I non prémoussées sont obtenues sous la forme d'un granulat par broyage à partir d'un produit semi-fini de P(M)I.

11. Procédé selon l'une quelconque des revendications 1 à 9, **caractérisé en ce que** les particules de P(M)I consistent en un polymère en suspension.

12. Procédé selon l'une quelconque des revendications 1 à 11, **caractérisé en ce que** les particules de P(M)I prémoussées présentent une taille maximale comprise entre 1,0 et 25 mm.

13. Procédé selon l'une quelconque des revendications précédentes, **caractérisé en ce que** les particules de P(M)I prémoussées présentent une densité apparente de 60 à 300 kg/m³.
